# EUROPEAN PATENT APPLICATION

(11) **EP 4 604 555 A1**
(43) Date of publication of application: **20.08.2025**
(21) Application number: 23877748.6
(22) Date of filing: 13.10.2023
(51) Int. Cl.: H04N 19/98, H04N 19/184, H04N 19/136, G06N 3/08

(54) **IMAGE DATA PROCESSING METHOD AND DEVICE, RECORDING MEDIUM ON WHICH BITSTREAM IS STORED, AND BITSTREAM TRANSMISSION METHOD**

(30) Priority: 14.10.2022 KR 20220132333
(71) Applicant: LG Electronics Inc., Yeongdeungpo-gu Seoul 07336 (KR)
(72) Inventor: KIM, Chulkeun, Seoul 06772 (KR); LIM, Jaehyun, Seoul 06772 (KR); GWAK, Donggyu, Seoul 06772 (KR)
(74) Representative: Frenkel, Matthias Alexander
(86) International application number: PCT/KR2023/015822
(87) International publication number: WO 2024/080825

(57) **Abstract**

An image data processing method and device, a recording medium on which a bitstream generated by means of the image data processing method is stored, and a bitstream transmission method are provided. The image data processing method according to the present disclosure comprises the steps of: obtaining latent space data of an image from a bitstream; and decoding the latent space data, wherein the decoded latent space data and/or reconstructed data of the image can be selectively output on the basis of information related to the decoding range of the image.

## Description

### [Technical Field]

The present disclosure relates to an image data processing method and device, and more specifically, relates to an image data processing method and device according to a user-defined decoding scope, a recording medium storing a bitstream generated by an image data processing method/device of the present disclosure, and a bitstream transmission method.

### [Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

### [Disclosure]

### [Technical Problem]

The present disclosure is to provide an image data processing method and device with improved processing efficiency.

In addition, the present disclosure is to provide an image data processing method and device based on a user-defined decoding scope.

In addition, the present disclosure is to provide an image processing method and device having a different output format according to a user-defined decoding scope.

In addition, the present disclosure is to provide a method for transmitting a bitstream generated by an image processing method or device according to the present disclosure.

In addition, the present disclosure is to provide a recording medium storing a bitstream generated by an image processing method or device according to the present disclosure.

In addition, the present disclosure is to provide a recording medium storing a bitstream received and decoded by an image processing method according to the present disclosure and used for image reconstruction.

The technical problems to be achieved in the present disclosure are not limited to the technical problems described above, and other technical problems not described may be clearly understood by those of ordinary skill in the art from the following descriptions.

### [Technical Solution]

An image data processing method according to an aspect of the present disclosure includes obtaining latent space data of an image from a bitstream and decoding the latent space data, wherein at least one of the decoded latent space data or reconstructed data of the image may be selectively output based on information related to a decoding scope of the image.

A receiving device according to another aspect of the present disclosure includes a memory and at least one processor, and the at least one processor obtains latent space data of an image from a bitstream and decodes the latent space data, wherein at least one of the decoded latent space data or reconstructed data of the image may be selectively output based on information related to a decoding scope of the image.

An image data processing method according to another aspect of the present disclosure includes obtaining latent space data of an image and encoding the latent space data, wherein information related to a decoding scope of the image is encoded within a bitstream, and at least one of decoded data of the latent space data or reconstructed data of the image may be selectively output based on information related to the decoding scope.

A transmitting device according to another aspect of the present disclosure includes a memory and at least one processor, and the at least one processor obtains latent space data of an image and encodes the latent space data, wherein information related to a decoding scope of the image is encoded within a bitstream, and at least one of decoded data of the latent space data or reconstructed data of the image may be selectively output based on information related to the decoding scope.

A recording medium according to another aspect of the present disclosure may store a bitstream generated by an image processing method or a transmitting device of the present disclosure.

A bitstream transmission method according to another aspect of the present disclosure may transmit a bitstream generated by an image processing method or a transmitting device of the present disclosure to a receiving device.

The features briefly summarized above for the present disclosure are merely an exemplary aspect of a detailed description of the present disclosure described below, and do not limit the scope of the present disclosure.

### [Advantageous Effects]

According to the present disclosure, an image data processing method and device with improved processing efficiency may be provided.

In addition, according to the present disclosure, an image data processing method and device based on a user-defined decoding scope may be provided.

In addition, according to the present disclosure, an image data processing method and device having a different output format according to a user-defined decoding scope may be provided.

In addition, according to the present disclosure, a method for transmitting a bitstream generated by an image processing method or device according to the present disclosure may be provided.

In addition, according to the present disclosure, a recording medium storing a bitstream generated by an image processing method or device according to the present disclosure may be provided.

In addition, according to the present disclosure, a recording medium storing a bitstream received and decoded by a receiving device according to the present disclosure and used for image reconstruction may be provided.

The effects obtainable from the present disclosure are not limited to the effects described above, and other effects not described may be clearly understood by those of ordinary skill in the art from the following descriptions.

### [Description of Drawings]

FIG. 1 is a diagram schematically showing a VCM system to which embodiments of the present disclosure may be applied.
FIG. 2 is a diagram schematically showing a VCM pipeline structure to which embodiments of the present disclosure may be applied.
FIG. 3 is a diagram schematically showing an image/video encoder to which embodiments of the present disclosure may be applied.
FIG. 4 is a diagram schematically showing an image/video decoder to which embodiments of the present disclosure may be applied.
FIG. 5 is a flowchart schematically showing a feature/feature map encoding procedure to which embodiments of the present disclosure may be applied.
FIG. 6 is a flowchart schematically showing a feature/feature map decoding procedure to which embodiments of the present disclosure may be applied.
FIG. 7 is a diagram showing a CABAC encoding structure for encoding one syntax element.
FIG. 8 is a diagram schematically showing a VCM system structure according to an embodiment of the present disclosure.
FIG. 9 is a flowchart showing an encoding process according to an embodiment of the present disclosure.
FIGS. 10 to 13 are flowcharts showing a decoding process according to an embodiment of the present disclosure.
FIG. 14 is a diagram showing an encoding/decoding operation method according to application of a user-defined decoding process.
FIG. 15 is a flowchart showing an image data processing method according to an embodiment of the present disclosure.
FIG. 16 is a flowchart showing an image data processing method according to an embodiment of the present disclosure.
FIG. 17 is a diagram showing an example of a content streaming system to which embodiments of the present disclosure may be applied.

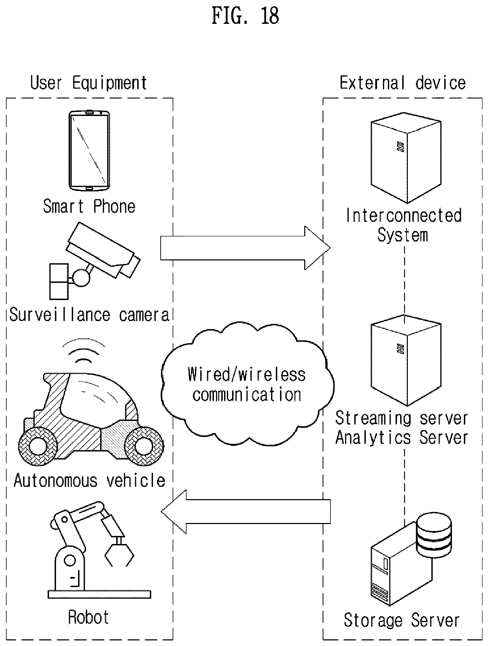

FIG. 18 is a diagram showing another example of a content streaming system to which embodiments of the present disclosure may be applied.

### [Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

### Overview of VCM System

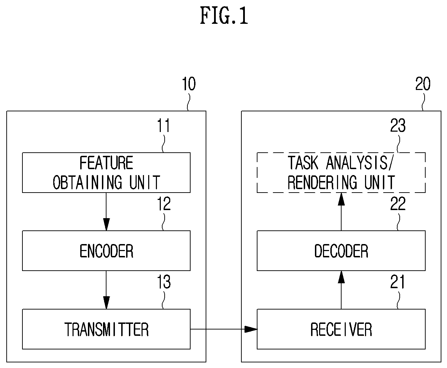

FIG. 1 is a diagram schematically showing a VCM system to which embodiments of the present disclosure may be applied.

Referring to FIG. 1, a VCM system may include an encoding device 10 and a decoding device 20.

An encoding device 10 may compress/encode a feature/a feature map extracted from a source image/video to generate a bitstream, and transmit a generated bitstream to a decoding device 20 through a storage medium or a network. An encoding device 10 may also be referred to as a feature encoding device. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set.

An encoding device 10 may include a feature obtaining unit 9, an encoder 10 and a transmitter 13.

A feature obtaining unit 9 may obtain a feature/a feature map for a source image/video. According to an embodiment, a feature obtaining unit 9 may obtain a feature/a feature map from an external device, e.g., a feature extraction network. In this case, a feature obtaining unit 9 performs a feature reception interface function. Alternatively, a feature obtaining unit 9 may obtain a feature/a feature map by executing a neural network (e.g., CNN, DNN, etc.) by using a source image/video as an input. In this case, a feature obtaining unit 9 performs a feature extraction network function.

According to an embodiment, an encoding device 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 10 may encode a feature/a feature map obtained by a feature obtaining unit 9. An encoder 10 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

A transmitter 13 may transmit feature/feature map information or data output in the form of a bitstream to a decoding device 20 through a digital storage medium or a network in the form of a file or streaming. Here, a digital storage medium may include various storage media such as USB, SD, CD, DVD, Blu-ray, HDD, SSD, etc. A transmitter 13 may include elements for generating a media file having a predetermined file format or elements for transmitting data through a broadcasting/communication network.

A decoding device 20 may obtain feature/feature map information from an encoding device 10 and reconstruct a feature/a feature map based on obtained information.

A decoding device 20 may include a receiver 21 and a decoder 22.

A receiver 21 may receive a bitstream from an encoding device 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoder 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

### VCM Pipeline

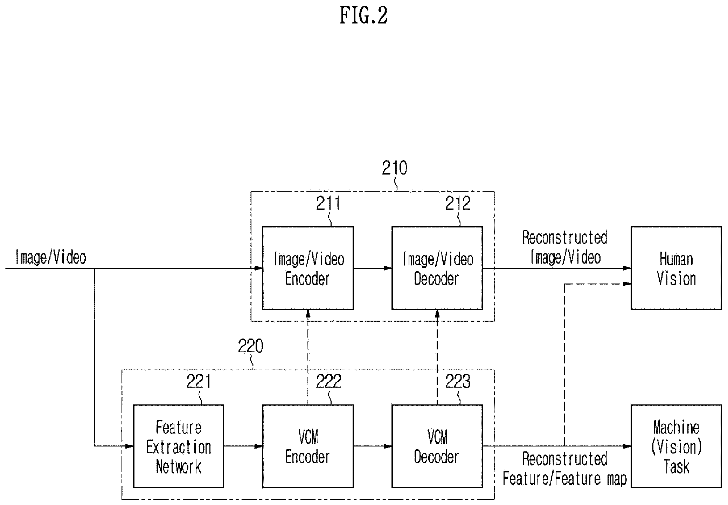

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

### Encoder

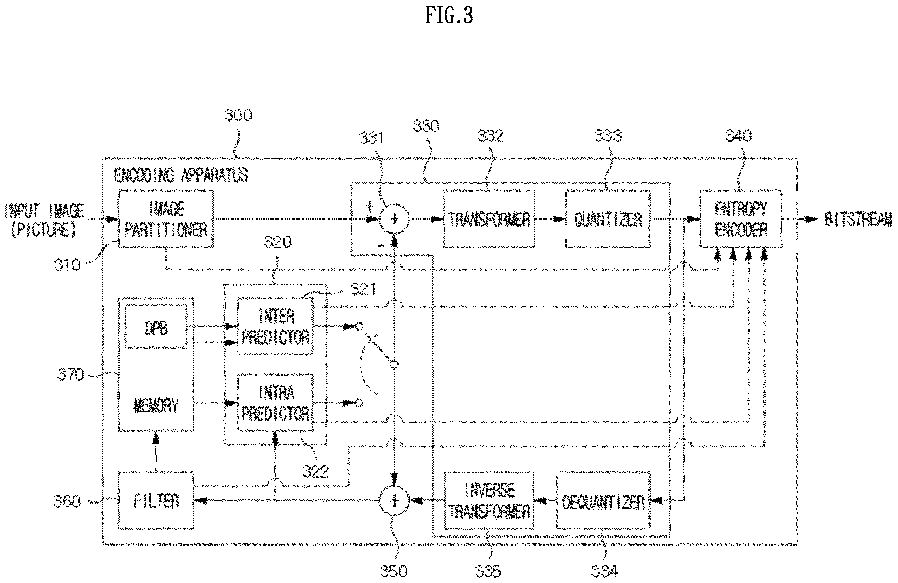

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

### Decoder

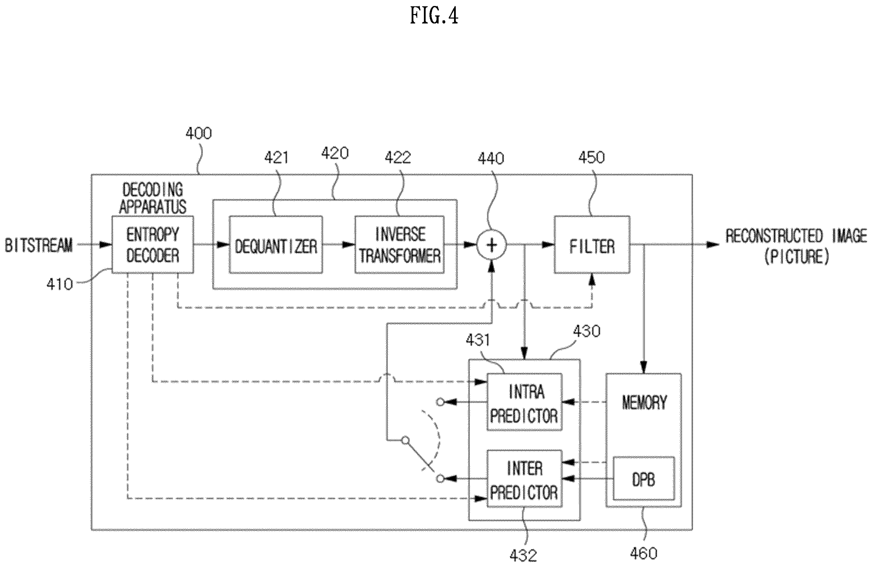

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding device, and an image/video decoder may be divided into an information decoder (an image/video information decoder) and/or a sample decoder (an image/video sample decoder) . In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method) .

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

### Feature/Feature Map Encoding Procedure

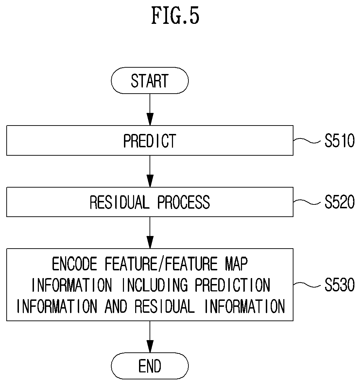

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

### Feature/Feature Map Decoding Procedure

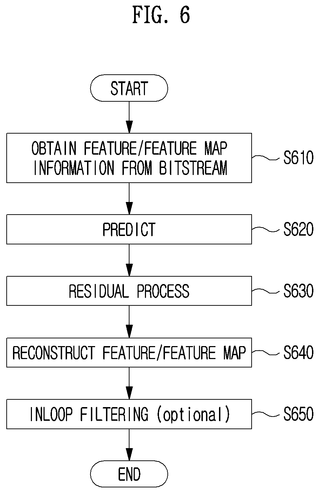

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

### Transform/Inverse Transform

An image/video encoder may derive a residual block based on a predicted block, and may derive quantized transform coefficients by applying transform and quantization to a derived residual block. Similarly, a VCM encoder may derive a residual block based on a predicted block (or, feature elements), and may derive quantized transform coefficients for a feature/a feature map by applying transform and quantization to a derived residual block. Information on quantized transform coefficients (residual information) may be included in a residual coding syntax and encoded and output in the form of a bitstream.

A decoder (an image/video decoder and a VCM decoder) may obtain information on quantized transform coefficients (residual information) from a bitstream and decode corresponding information to derive quantized transform coefficients. In addition, a decoder may derive a residual block through dequantization/inverse transform based on quantized transform coefficients. As described above, at least one of quantization/dequantization and/or transform/inverse transform may be omitted. When transform/inverse transform is omitted, a transform coefficient may be referred to as a coefficient or a residual coefficient, or may still be referred to as a transform coefficient for the uniformity of expression. Whether to omit transform/inverse transform may be signaled based on a predetermined flag, e.g., transform_skip_flag. Meanwhile, in VCM, whether to omit transform/inverse transform may be determined in a unit of a feature/a feature map or may be determined in a unit of a channel.

Transform/inverse transform may be performed based on predetermined transform kernel(s). For example, according to the present disclosure, a multiple transform selection (MTS) scheme may be applied for transform/inverse transform. In this case, some of a plurality of transform kernel sets may be selected and applied to a current block or a feature/a feature map. A transform kernel may be called various terms such as a transform matrix, a transform type, etc. For example, a transform kernel set may represent a combination of a vertical transform kernel (a vertical transform kernel) and a horizontal transform kernel (a horizontal transform kernel).

### Quantization/Dequantization

The quantizer of an image/video encoder may apply quantization to transform coefficients to derive quantized transform coefficients, and the dequantizer of an image/video encoder or the dequantizer of an image/video decoder may apply dequantization to quantized transform coefficients to derive transform coefficients. Similarly, a VCM encoder may apply quantization to transform coefficients to derive quantized transform coefficients, and the dequantizer of a VCM encoder or the dequantizer of a VCM decoder may apply dequantization to quantized transform coefficients to derive transform coefficients. Generally, in feature/feature map coding, a quantization rate may be changed, and a compression rate may be adjusted by using a changed quantization rate. From an implementation perspective, instead of directly using a quantization rate by considering complexity, a quantization parameter (QP) may be used. For example, the quantization parameter of an integer value from 0 to 63 may be used, and each quantization parameter value may correspond to an actual quantization rate. A quantization parameter (QP_{Y}) for a luma component (a luma sample) and a quantization parameter (QP_{C}) for a chroma component (a chroma sample) may be configured differently.

A quantization process may use a transform coefficient (C) as an input and divide it by a quantization rate (Qstep) to obtain a quantized transform coefficient (C') based thereon. In this case, considering computational complexity, a quantization rate may be multiplied by a scale to make it an integer, and a shift operation may be performed by a value corresponding to a scale value. A quantization scale may be derived based on the product of a quantization rate and a scale value. In other words, a quantization scale may be derived according to a QP. A quantization scale may be applied to a transform coefficient (C) to derive a quantized transform coefficient (C') based thereon.

A dequantization process is the reverse process of a quantization process, and a quantized transform coefficient (C') may be multiplied by a quantization rate (Qstep) to obtain a reconstructed transform coefficient (C") based thereon. In this case, a level scale may be derived according to a quantization parameter, and a level scale may be applied to a quantized transform coefficient (C') to derive a reconstructed transform coefficient (C'') based thereon. A reconstructed transform coefficient (C'') may be somewhat different from an initial transform coefficient (C) due to loss in a transform and/or quantization process. Accordingly, an encoder performs dequantization in the same way as a decoder.

Meanwhile, an adaptive frequency weighting quantization technology that adjusts quantization strength according to a frequency may be applied. An adaptive frequency weighting quantization technology is a method for applying quantization strength differently for each frequency. Adaptive frequency weighting quantization may apply quantization strength differently for each frequency by using a predefined quantization scaling matrix. In other words, the above-described quantization/dequantization process may be performed further based on a quantization scaling matrix. For example, a different quantization scaling matrix may be used according to whether a prediction mode applied to a current block is inter prediction or intra prediction to generate the residual signal of a current block and/or the size of a current block. A quantization scaling matrix may be called a quantization matrix or a scaling matrix. A quantization scaling matrix may be predefined. In addition, for frequency adaptive scaling, frequency quantization scale information for a quantization scaling matrix may be configured/encoded in an encoder and signaled to a decoder. Frequency quantization scale information may be referred to as quantization scaling information. Frequency quantization scale information may include scaling list data (scaling_list_data). Based on scaling list data, a (modified) quantization scaling matrix may be derived. In addition, frequency quantization scale information may include present flag information indicating whether scaling list data is present. Alternatively, when scaling list data is signaled at a higher level (e.g., a sequence level, a feature set group level, etc.), information indicating whether scaling list data is modified at a lower level (e.g., a feature set level, a channel level, etc.) may be further included.

Feature quantization/dequantization may be performed based on a predetermined quantization group. Specifically, a plurality of quantization intervals may be configured based on the data distribution characteristics of a feature set. Configured quantization intervals have a different data distribution range, and may be defined as one quantization group. And, a feature quantization/dequantization operation may be performed by transforming the data distribution of each channel in a feature set into the data distribution range of any one of the quantization intervals.

Meanwhile, quantization-related information may be encoded in a bitstream for dequantization. According to an embodiment, quantization-related information may include global quantization information, activation function information, quantization bit count and quantization interval index information. The global quantization information may represent whether the quantization bit count is configured for each quantization interval or is configured equally for all quantization intervals. The activation function information may represent the type of an activation function applied to a current feature. For example, activation function information may represent whether an activation function applied to a current feature is a first activation function that must signal both the maximum value and minimum value of each quantization interval or a second activation function that needs to signal only the maximum value of each quantization interval. The quantization bit count may be configured for each quantization interval or may be configured equally for all quantization intervals based on the above-described global quantization information. When the quantization bit count is configured to be the same for all quantization intervals, the quantization bit count may be signaled only once for all quantization intervals.

In addition, quantization-related information may further include the number of quantization intervals in a quantization group and the minimum value and maximum value of each quantization interval. In this case, the minimum value and maximum value of each quantization interval may be adaptively signaled based on the type of an activation function. For example, when an activation function applied to a current feature is a first activation function (e.g., Leaky ReLU), both the minimum value and maximum value of each quantization interval may be signaled. In contrast, when an activation function applied to a current feature is a second activation function (e.g., ReLU), the minimum value of each quantization interval is estimated to be 0 and only the maximum value of each quantization interval may be signaled.

### Entropy Coding

Part or all of the feature/feature map information may be encoded by an entropy encoder, and part or all of the feature/feature map information may be decoded by an entropy decoder. In this case, feature/feature map information may be encoded/decoded in a unit of a syntax element in the same way as image/video information. In the present disclosure, encoding/decoding information may include encoding/decoding by a method described in this paragraph.

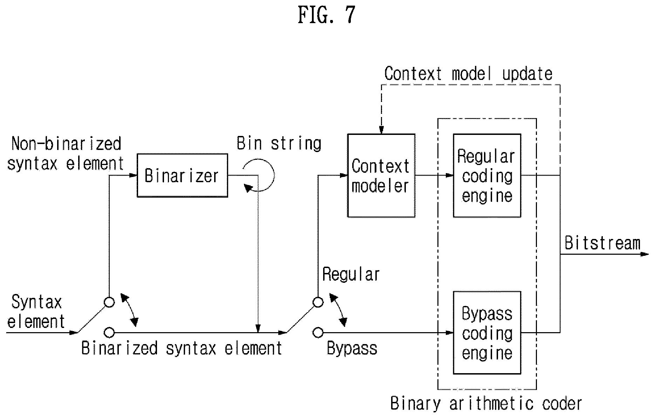

FIG. 7 is a diagram showing a CABAC encoding structure for encoding one syntax element.

Referring to FIG. 7, the encoding process of CABAC first transforms an input signal into a binary value through binarization when an input signal is a syntax element, not a binary value. When an input signal is already a binary value, it is bypassed without going through binarization. Here, each binary number 0 or 1 configuring a binary value is called a bin. For example, when a binary string (a bin string) after binarization is 110, 1, 1 and 0 are called a bin, respectively. The bin(s) for one syntax element may represent the value of a corresponding syntax element.

Binarized bins are input to a regular coding engine or a bypass coding engine. A regular coding engine allocates a context model that reflects a probability value to a corresponding bin and encodes a corresponding bin based on an allocated context model. After performing coding for each bin, a regular coding engine may renew a probability model for a corresponding bin. Bins coded in this way are called a context-coded bin. A bypass coding engine omits a procedure for estimating a probability for an input bin and a procedure for renewing a probability model applied to a corresponding bin after coding. The coding speed is improved by coding a bin input by applying a uniform probability distribution (e.g., 50:50) instead of allocating a context. Bins coded in this way are called a bypass bin. A context model may be allocated and updated for each context-coded (regular-coded) bin, and a context model may be indicated based on ctxidx or ctxInc. ctxidx may be derived based on ctxInc. Specifically, for example, a context index (ctxidx) that indicates a context model for each regular-coded bin may be derived as the sum of context index increment (ctxInc) and context index offset (ctxIdxOffset). Here, ctxInc may be derived differently for each bin. ctxIdxOffset may be represented as the lowest value of ctxIdx. ctxIdxOffset may be generally determined according to a slice type, and a context model for one syntax element in a slice may be distinguished/derived based on ctxinc.

In an entropy encoding procedure, whether to perform encoding through a regular coding engine or whether to perform encoding through a bypass coding engine may be determined and a coding path may be switched. Entropy decoding performs the same process as entropy encoding in reverse order.

In the above-described VCM system, the purpose of a decoder is to decode the encoded input data, so when input data is an image/a video, the output data of a decoder also becomes a (reconstructed) image/video in general. However, for a machine task, a decoder only needs to decode feature data, i.e., latent space data, even when an image/a video is input. In this case, when an image/a video is reconstructed, it may cause increased unnecessary complexity and reduced efficiency.

Accordingly, the present disclosure provides various embodiments regarding various information and interfaces for conveying a user purpose to a decoder side and a user-defined decoding process. The embodiments of the present disclosure may be implemented individually or may be implemented in a combination of at least two. Hereinafter, the embodiments of the present disclosure will be described in detail by referring to attached drawings.

### Embodiment

According to an embodiment of the present disclosure, in a VCM system, a decoder may selectively output at least one of latent space data of an input image or a reconstructed image. The selection may follow a user purpose, and for this purpose, information related to a decoding object and scope may be transmitted to a decoder through a bitstream.

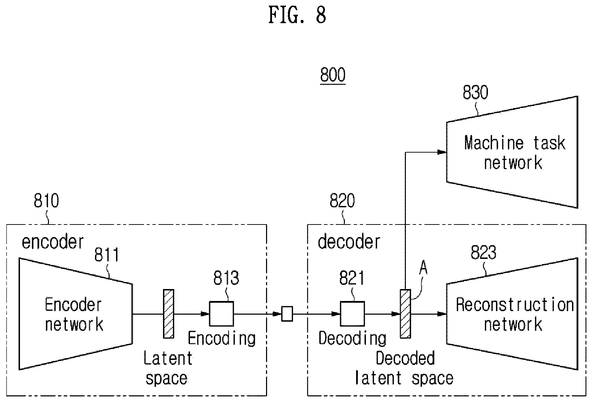

FIG. 8 is a diagram schematically showing a VCM system structure according to an embodiment of the present disclosure.

Referring to FIG. 8, a VCM system 800 may include an encoder 810, a decoder 820 and a machine task network 830.

An encoder 810 may include an encoder network 811 and an encoder 813. An encoder network 811 may generate latent space data from input data (or, an input image). To this end, an encoder network 811 may perform data compression by reducing the dimension of input data through a neural network operation, etc. An encoder network 811 may refer to a feature extraction network described above (e.g., CNN, DNN, etc.), and in this case, latent space data may include feature information. And, an encoder 813 may perform quantization, entropy coding, etc., by considering the importance or probability characteristics of a latent space (or, feature) to increase the compression efficiency of latent space data.

A decoder 820 may include a decoder 821 and a reconstruction network 823. A decoder 821 may perform a function corresponding to an encoder 813. In other words, a decoder 821 may decode latent space data by performing entropy decoding, dequantization, etc. on encoded data in a bitstream. A reconstruction network 823 may perform a function corresponding to an encoder network 811. In other words, a reconstruction network 823 may reconstruct an image based on decoded latent space data (A). And, a reconstructed image may be mainly used for a human vision task aimed at human viewing.

A machine task network 830 may receive decoded latent space data (A) to perform a predetermined machine task such as object detection/tracking/partition, image processing, etc. As described above, latent space data includes the feature information of an input image, so a machine task network 830 may perform a machine task by using only decoded latent space data (A) without having to receive an image reconstructed by a reconstruction network 823.

In a VCM system 800 described above, a decoding process may be largely divided into two steps, i.e., a latent space data decoding step and an image reconstruction step.

In a latent space data decoding step, the latent space data of an input image may be decoded. Decoded latent space data (A) may be input to a reconstruction network 823 and used to reconstruct an input image or may be input to a machine task network 830 and used directly to perform a predetermined machine task. In an image reconstruction step, an input image may be reconstructed based on decoded latent space data (A), i.e., dimension reduction data. A reconstructed input image may be used to perform a human vision task.

The above-described decoding process may be performed only up to a latent space data decoding step or may be performed entirely to an image reconstruction step according to a user purpose. For example, for a machine task, the above-described decoding process may be performed only up to a latent space data decoding step. In contrast, for a human vision task, the above-described decoding process may be performed entirely to an image reconstruction step.

A decoder 821 may adaptively perform a decoding operation according to the scope of a decoding process. For example, when the above-described decoding process is performed only up to a latent space data decoding step, the reference and prediction operation of a decoder 821 may be performed in a latent space domain. Here, when reference and prediction operations are performed in a latent space domain, it may mean that inter and intra reference and prediction are performed by using pre-decoded latent space data. In contrast, when the above-described decoding process is performed entirely to an image reconstruction step, the reference and prediction operation of a decoder 821 may be performed in an image/video domain or in a latent space and an image/video domain. Here, when reference and prediction operations are performed in an image/video domain, it may mean that inter and intra reference and prediction are performed by using a pre-reconstructed image. In addition, when reference and prediction operations are performed in a latent space and an image/video domain, it may mean that inter and intra reference and prediction are performed by using both pre-decoded latent space data and a pre-reconstructed image and inter-domain prediction information may also be shared.

In order to designate the scope of such a decoding process, a syntax element prediction_domain_idc may be encoded. A specific example of prediction_domain_idc is as in Table 1.

**[Table 1]**

| Prediction_domain_idc | Reference and prediction domain |
|---|---|
| 0 | Latent space domain |
| 1 | Image/video domain |
| 2 | Latent space & image/video domain |

Referring to Table 1, prediction_domain_idc having a value of 0 may represent that the above-described reference and prediction domain is a latent space domain. In contrast, prediction_domain_idc having a value of 1 may represent that the above-described reference and prediction domain is an image/video domain. In contrast, prediction_domain_idc having a value of 2 may represent that the above-described reference and prediction domain is a latent space and image/video domain. prediction_domain_idc may be defined at a sequence level representing a property for the entire encoded data (e.g., a sequence parameter set) or may be defined at each frame level of an input image (e.g., a picture parameter set).

It should be noted that Table 1 is just an example and the embodiments of the present disclosure are not limited thereto. For example, unlike Table 1, a latent space domain may be subdivided into a plurality of domains based on the importance or probability characteristics of a latent space (or, feature). In addition, unlike Table 1, prediction_domain_idc may have a 1-bit value that distinguishes only a latent space domain and an image/video domain.

Meanwhile, when encoding is performed in an image/video domain or a latent space and image/video domain described above, it may be difficult to decode only latent space data for performing a machine task. This is because when the latent space data of a current image is extracted based on data generated through reference and prediction in an image/video domain (e.g., residual data generated through intra or inter reference and prediction, etc.), decoded latent space data may not properly represent the characteristics of a current image, which may degrade the performance of a machine task. Accordingly, in an embodiment, when a decoding process is performed only up to a latent space data decoding step, a decoding operation scope may be limited to a latent space domain. In addition, in an embodiment, information representing whether only latent space data may be decoded may be transmitted to a decoder 820 through a bitstream. Table 2 shows an example of information representing whether the scope of a decoding process may be designated.

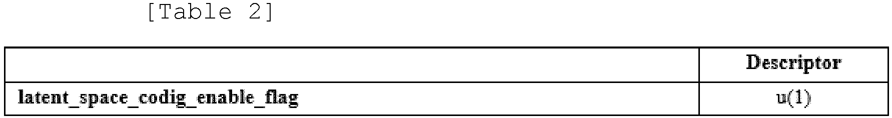

Referring to Table 2, latent_space_coding_enable_flag may represent whether a decoding process may be performed by designating its scope. For example, latent_space_coding_enable_flag having a value of 1 may represent that a decoding process may be performed only up to a latent space data decoding step. And, this means that the reference and prediction of a latent space domain may be applied. In contrast, latent_space_coding_enable_flag with a value of 0 may represent that only latent space data may not be decoded and a decoding process is performed entirely to an image reconstruction step. And, this means that the reference and prediction of an image/video domain or a latent space and image/video domain may be applied. Like prediction_domain_idc described above, latent_space_codig_enable_flag may be defined at a sequence level (e.g., a sequence parameter set) or a frame level (e.g., a picture parameter set).

Meanwhile, according to an embodiment, latent_space_coding_enable_flag may also represent the constraint of a decoding structure.

An encoding structure may also be changed as a user purpose is changed or the operation environment of a device is changed. Accordingly, it is necessary to change and apply the value of latent_space_codig_enable_flag during a service (e.g., a real-time encoding/decoding service). To this end, in an embodiment, a network abstraction layer (NAL) unit that may confirm the value of latent_space_codig_enable_flag and reference and prediction domains may be defined. Table 3 shows an example of a NAL unit for confirming and renewing decoding control information.

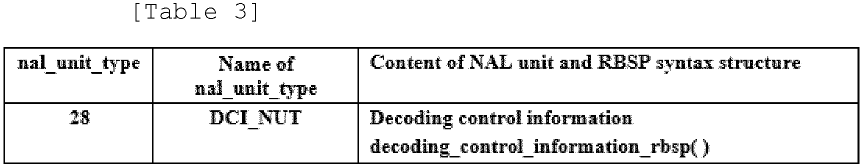

Referring to Table 3, DCI_NUT may be a NAL unit type regarding decoding control information. The decoding control information may include information representing a decoding available operation scope. For example, the decoding control information may include the value of latent_space_codig_enable_flag and reference and prediction domain information. In addition, the decoding control information may further include decoding constraint information. Tables 4 to 8 show a specific example of the decoding control information.

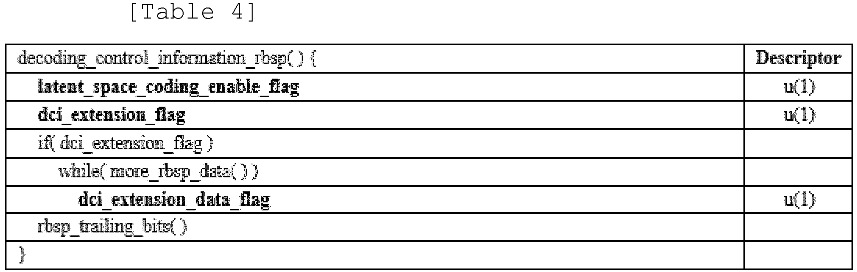

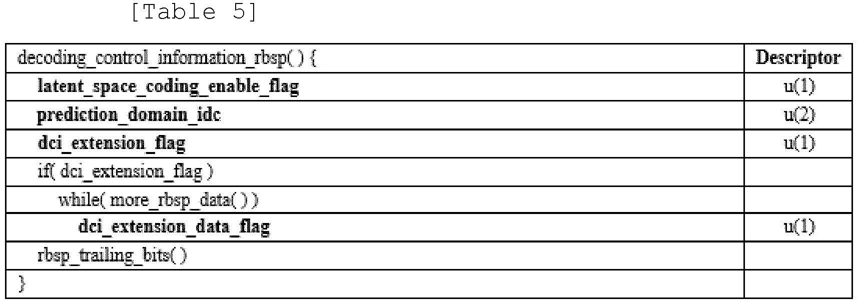

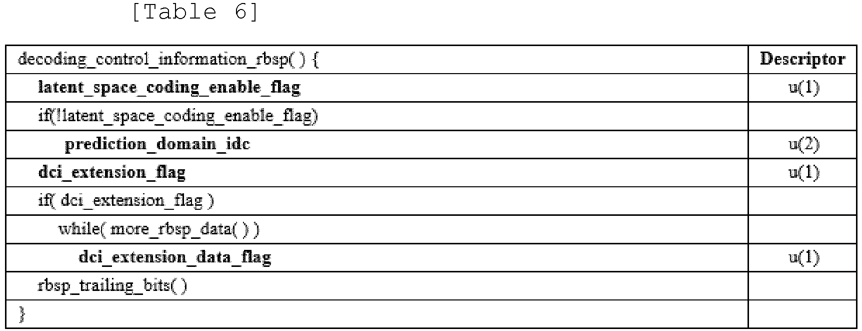

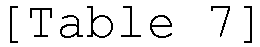

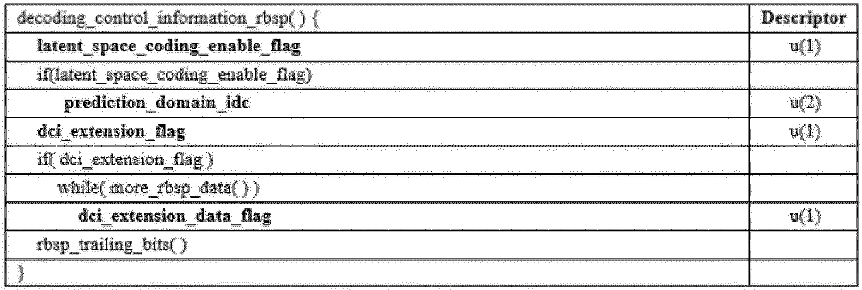

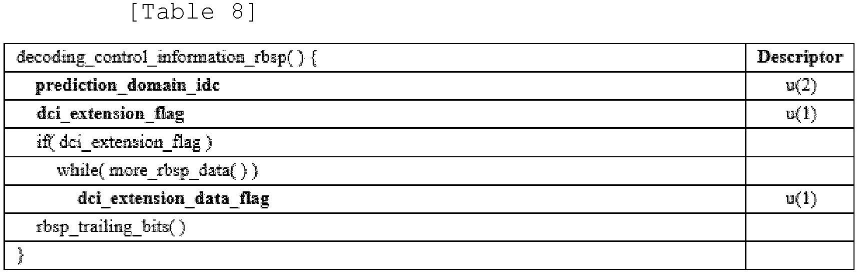

Table 4 shows an example in which latent_space_coding_enable_flag is defined solely within decoding_control_information_rbsp( ). Next, Table 5 shows an example in which latent_space_coding_enable_flag and prediction_domain_idc are defined together within decoding_control_information_rbsp( ). Next, Table 6 shows an example in which prediction_domain_idc is defined within decoding_control_information_rbsp( ) only when the value of latent_space_coding_enable_flag is 0. This is because when the value of latent_space_coding_enable_flag is 1, sole decoding of latent space data must be possible, but the sole decoding becomes impossible when reference and prediction operations are performed in an image/video domain. Accordingly, in this case, prediction_domain_idc may not be defined separately and may be limited to have a specific value (e.g., 0). Next, Table 7 shows an example in which prediction_domain_idc is defined within decoding_control_information_rbsp( ) only when the value of latent_space_coding_enable_flag is 1. This is because when the value of latent_space_coding_enable_flag is 0, sole decoding of latent space data becomes impossible, so prediction_domain_idc may be limited to a specific value (e.g., 1 or 2). Next, Table 8 shows an example in which prediction_domain_idc is defined solely within decoding_control_information_rbsp( ).

In Tables 4 to 8 above, dci_extension_flag may represent whether dci_extension_data_flag exists. For example, dci_extension_flag having a value of 1 may represent that dci_extension_data_flag may exist. In contrast, dci_extension_flag having a value of 0 may represent that dci_extension_data_flag does not exist.

dci_extension_data_flag may represent whether decoding control information is extended, i.e., whether DCI extension data (dci_extension_data) exists. For example, dci_extension_data_flag having a value of 1 may represent that a constraint condition defined by dci_extension_data is True and applied to an encoding bitstream. In contrast, dci_extension_data_flag having a value of 0 may represent that a constraint condition defined by dci_extension_data is False and not applied to an encoding bitstream.

Hereinafter, an encoding/decoding process in the above-described VCM system 800 will be described in detail.

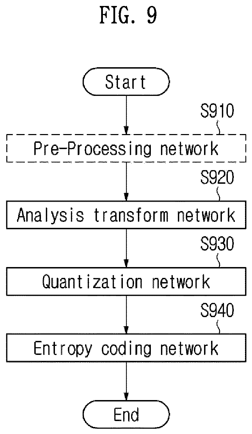

FIG. 9 is a flowchart showing an encoding process according to an embodiment of the present disclosure. Each step in FIG. 9 may be performed by an encoder 810 or a preprocessor (not shown) in FIG. 8. Specifically, S910 may be performed by a preprocessor, S920 may be performed by an encoder network 811 and S930 and S940 may be performed by an encoder 813. According to an embodiment, a preprocessor may be implemented outside an encoder 810 or may be implemented inside an encoder 810.

Referring to FIG. 9, a preprocessor may preprocess input data (or, an input image) into a form suitable for encoding S910. The preprocessing step is an optional process, which may be omitted according to an embodiment.

An encoder network 811 may extract low-dimensional latent space data (or, feature) from input data S920. At this step, whether to designate a decoding process scope may be determined. For example, when input data is the prediction signal of an image/a video, sole decoding of latent space data alone becomes impossible, so the value of latent_space_codig_enable_flag and prediction_domain_idc may be configured as 0 and 1, respectively.

An encoder 813 may perform quantization on extracted latent space data S930. In addition, an encoder 813 may perform entropy coding on quantized latent space data. For this purpose, a hyperprior or context-related network may be further added to an encoder 810.

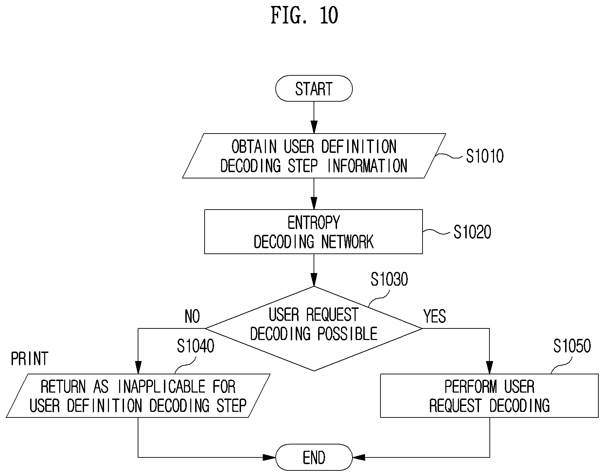

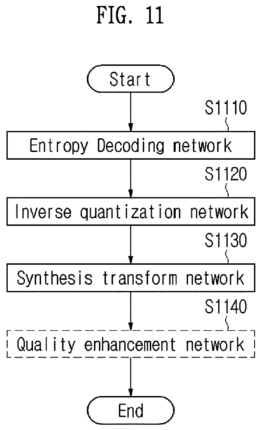

FIGS. 10 to 13 are flowcharts showing a decoding process according to an embodiment of the present disclosure. A decoding process may be largely divided into two steps, i.e., a step for determining the availability of a user-defined decoding process and a step for performing user-defined decoding. FIG. 10 shows a method for determining the availability of a user-defined decoding process and FIGS 11 to 13 show a method for performing user-defined decoding. Each step in FIGS. 10 to 13 may be performed by a decoder 821 or a reconstruction network 823 in FIG. 8.

First, referring to FIG. 10, a decoder 821 may obtain user-defined decoding information from a bitstream S1010. Here, user-defined decoding information is information related to the scope of a decoding process, which may represent the output format of a decoder 820. An example of user-defined decoding information is as in Table 9.

**[Table 9]**

| output_level_idc | Description |
|---|---|
| 0 | Image/video reconstruction |
| 1 | Latent space reconstruction |
| 2 | Image/video & latent space reconstruction |

Referring to Table 8, a syntax element output_level_idc may represent a decoder output format designated by a user. For example, output_level_idc having a value of 0 may represent that a decoding process is performed entirely to an image/video reconstruction step and a decoder output is a reconstructed image. In contrast, output_level_idc having a value of 1 may represent that a decoding process is performed only up to a latent space data decoding step and a decoder output is latent space data. In contrast, ouput_level_idc having a value of 2 may represent that a decoding process is performed entirely to an image/video reconstruction step and a decoder output is a reconstructed image and latent space data. The value of output_level_idc may be determined according to a user request, so its value may be changed according to a user request even during a decoding process. Meanwhile, it should be noted that Table 8 is just an example and the embodiments of the present disclosure are not limited thereto. For example, unlike Table 8, the output format of a decoder may be determined as any one of latent space data and a reconstructed image. In this case, unlike Table 8, output_level_idc may have a 1-bit value that distinguishes only the two output formats.

A decoder 821 may perform an entropy decoding operation on a bitstream to obtain various parameters for decoding S1020. The parameter may include decoder operation control information, e.g., prediction_domain_idc and latent_space_coding_enable_flag described above. At this step, an entropy decoding operation on latent space data may not be performed.

A decoder 821 may determine whether a user-defined decoding process is available based on user-defined decoding information and decoder operation control information obtained from previous steps S1030. For example, when the value of output_level_idc is 0, a user-defined decoding process may be available regardless of the value of prediction_domain_idc or latent_space_codig_enable_flag. In contrast, when the value of output_level_idc is 1 or 2, a user-defined decoding process may be available only when the value of prediction_domain_idc is 0 and the value of latent_space_codig_enable_flag is 1.

When a user-defined decoding process is unavailable ('NO' in S1030), a decoder 820 may generate a message showing that a user-defined decoding process is unavailable, transmit it to a user and terminate a decoding process S1040. However, when a rule is predefined that a predetermined decoding process is performed when a user-defined decoding process is unavailable, a corresponding decoding process may continue to proceed.

In contrast, when a user-defined decoding process is available ('YES' in S1030), a decoder 821 may perform a user-defined decoding process S1050. The specific example of a user-defined decoding method is as shown in FIGS. 11 to 13.

FIG. 11 is an example in which decoding of an image/video level (i.e., output_level_idc = 0) is performed. Referring to FIG. 11, a decoder 821 may perform entropy decoding on latent space data S1110. And, a decoder 821 may perform dequantization and synthesis transform on the latent space data S1120 and S1130 to decode the latent space data. According to an embodiment, a post-processing operation for improving the quality of the latent space data, etc. may be further performed in response to the preprocessing operation of an encoding process S1140 (optional).

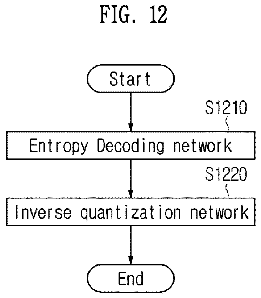

FIG. 12 is an example in which decoding of a latent space level (i.e., output_level_idc = 1) is performed. Referring to FIG. 12, a decoder 821 may perform entropy decoding and dequantization for latent space data S1210 and S1220. Unlike a method in FIG. 11, synthesis transform and post-processing operations for the latent space data may be omitted.

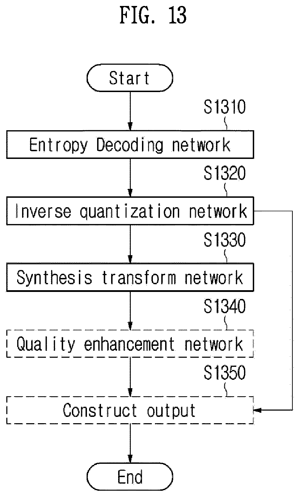

FIG. 13 is an example in which decoding of image/video and latent space levels (i.e., output_level_idc = 2) is performed. Referring to FIG. 13, a decoder 821 may perform entropy decoding, dequantization synthesis transform and post-processing operations for latent space data S1310 to S1340 to decode the latent space data. And, a reconstruction network 823 may reconstruct an image based on the decoded latent space data S1350. The reconstructed image may be output from a decoder 820 with the decoded latent space data. According to an embodiment, the reconstructed image may configure a single output with the decoded latent space data or may configure an individual output independent of each other.

A method in FIGS. 10 to 13 described above represents a decoder operation based on user-defined decoding information and decoding control information. It should be noted that according to an embodiment, some steps in FIGS. 10 to 13 may be changed in order or omitted.

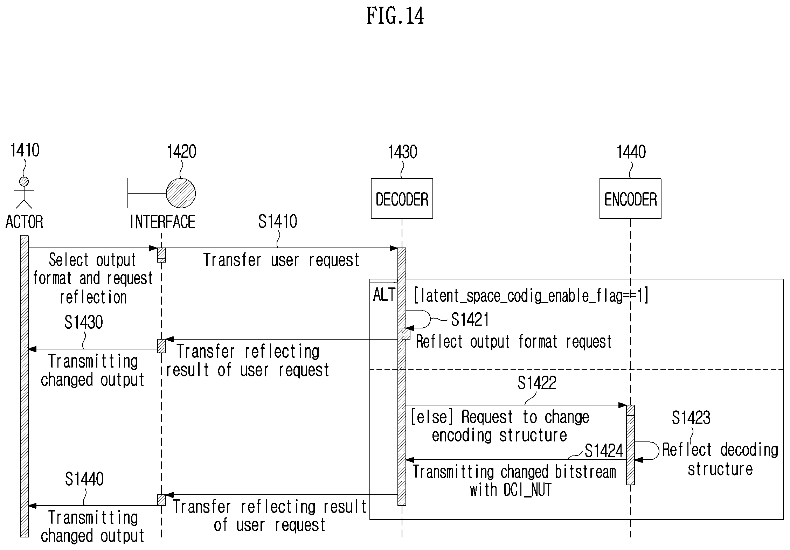

FIG. 14 is a diagram showing an encoding/decoding operation method according to application of a user-defined decoding process. A corresponding example relates to a case in which a bitstream encoded in real time or in various structures already exists. In FIG. 14, a user 1410 refers to a subject who manages a VCM system and determines a task purpose, and may be a broad concept including a person, artificial intelligence (AI), a system management application, etc. A decoder 1430 may refer to not only a decoder (or, a decoding device) described above by referring to FIG. 8, but also various user application programs having a decoding function. An interface 1420 is an interface for information exchange between a user 1410 and a decoder 1430, and may be implemented as a single application with a decoder 1430 according to an embodiment. An encoder 1440 may refer to not only an encoder (or, an encoding device) described above by referring to FIG. 8, but also various application programs or service providers having an encoding function.

Referring to FIG. 14, a user 1410 may request the application of a user definition decoding process that designates a decoder output format to a decoder 1430 through a predetermined interface 1420 S1410. For this purpose, information transmitted to a decoder 1430 includes, for example, output_level_idc described above by referring to Table 8.

A decoder 1430 may determine whether a user definition decoding process can be applied to a current bitstream and perform a detailed procedure for changing an output format based on a determination result thereof S1420. Specifically, when a user definition decoding process can be applied to a current bitstream (e.g., latent_space_coding_enable_flag = 1), a decoder 1430 may configure/change an output format according to a user request S1421 and transmit information related to the configuration/change result to a user 1410 through an interface 1420 S1430. This may correspond to a case in which a current bitstream is capable of both latent space data decoding and image reconstruction, and the configuration/change of an output format may be possible without changing a bitstream.

In contrast, when a user definition decoding process cannot be applied to a current bitstream (e.g., latent_space_coding_enable_flag = 0), a decoder 1430 may request an encoder 1440 to change an encoding structure or a bitstream S1422. This may correspond to a case in which a current bitstream is incapable of decoding of only latent space data, and the configuration/change of an output format may also be impossible without changing a bitstream. In this case, an encoder 1440 may generate a new bitstream according to a changed encoding structure in response to the decoder request S1423 and transmit the generated bitstream to a decoder 1430 S1424. And, a decoder 1430 may configure/change an output format for the generated bitstream and transmit information related to the configuration/change result to a user 1410 through an interface 1420 S1440. In this case, it goes without saying that information related to a changed encoding structure may be included in the above-described decoding control information (decoding_control_information_rbsp( )) and transmitted together to a decoder 1430.

Meanwhile, when a user definition decoding process cannot be applied to a current bitstream (e.g., latent_space_coding_enable_flag = 0), a decoder 1430 may inform a user 1410 that an output format cannot be configured/changed without a separate request to an encoder 1440.

According to the embodiments of the present disclosure, in a VCM system, a decoder may selectively output at least one of latent space data or a reconstructed image according to a user request. Accordingly, an adaptive decoding process based on a user purpose or a task type may be possible. In addition, since the decoding process of unnecessary data may be omitted in performing a task, system complexity may be improved and efficiency may be further enhanced.

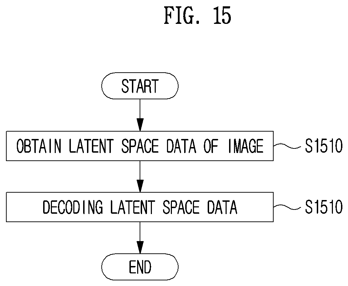

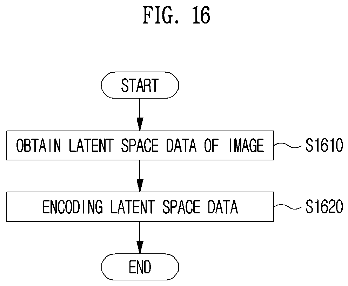

Hereinafter, referring to FIGS. 15 and 16, an image data processing method according to an embodiment of the present disclosure will be described in detail.

FIG. 15 is a flowchart showing an image data processing method according to an embodiment of the present disclosure. An image data processing method in FIG. 15 may be performed by a receiving device or various applications having a decoding function.

Referring to FIG. 15, a receiving device may obtain the latent space data of an image from a bitstream S1510 and decode the obtained latent space data S1520. In this case, at least one of the decoded latent space data or the reconstructed date of the image may be selectively output based on information related to the decoding scope of the image.

In an embodiment, information related to the decoding scope may include latent space coding activation information (e.g., latent_space_coding_enable_flag) representing whether only the latent space data can be used as a decoding object.

In an embodiment, information related to the decoding scope may include prediction domain information (e.g., prediction_domain_idc) representing a reference and prediction scope for decoding the latent space data. Here, the prediction domain may include a first prediction domain that is restricted to refer only to latent space data, a second prediction domain that is restricted to refer only to a pre-reconstructed image and a third prediction domain that can refer to both latent space data and a pre-reconstructed image. The value of the prediction domain information may be determined based on whether only the latent space data can be used as the decoding object. For example, when only the latent space data cannot be used as the decoding object (e.g., latent_space_coding_enable_flag = 0), the prediction domain information may be restricted not to have a value indicating the first prediction domain.

In an embodiment, information related to the decoding scope may have a decoding control information (DCI) network abstraction layer (NAL) unit type. In other words, information related to the decoding scope may be obtained through a DCI syntax.

In an embodiment, information related to the decoding scope of the image may include output level information (e.g., output_level_idc) representing the output object.

In an embodiment, when the decoding scope of the image is not a latent space level, an image data processing method in FIG. 15 may further include reconstructing the image based on the decoded latent space data.

In an embodiment, when the decoding scope of the image cannot be designated, an image data processing method in FIG. 15 may further include receiving a new bitstream, and obtaining S1510 and decoding S1520 of the latent space data may be performed based on the new bitstream.

FIG. 16 is a flowchart showing an image data processing method according to an embodiment of the present disclosure. An image data processing method in FIG. 16 may be performed by a transmitting device or various applications having an encoding function.

Referring to FIG. 16, a transmitting device may obtain the latent space data of an image S1610 and encode the obtained latent space data S1620. In this case, information related to the decoding scope of the image may be encoded in a bitstream. In addition, based on information related to the decoding scope, at least one of the decoded data of the latent space data or the reconstructed data of the image may be selectively output by a receiving device.

In an embodiment, information related to the decoding scope may include latent space coding activation information (e.g., atent_space_coding_enable_flag) representing whether only the latent space data can be used as a decoding object.

In an embodiment, information related to the decoding scope may include prediction domain information representing a reference and prediction scope for decoding the latent space data.

In an embodiment, information related to the decoding scope may include output level information (e.g., output_level_idc) representing the selective output object.

Meanwhile, a bitstream generated by a transmitting device may be stored in a non-transitory computer-readable recording medium or may be transmitted to a receiving device through various communication means (e.g., a wired/wireless network).

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding device or an image decoding device performing a predetermined operation (step) may perform an operation (a step) for checking a condition or a situation for performing a corresponding operation (step). For example, when it is stated that a predetermined operation is performed when a predetermined condition is satisfied, an image encoding device or an image decoding device may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding device) and an encoder (an encoding device) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an argumente reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

FIG. 16 is a diagram showing an example of a content streaming system to which embodiments of the present disclosure may be applied.

Referring to FIG. 16, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

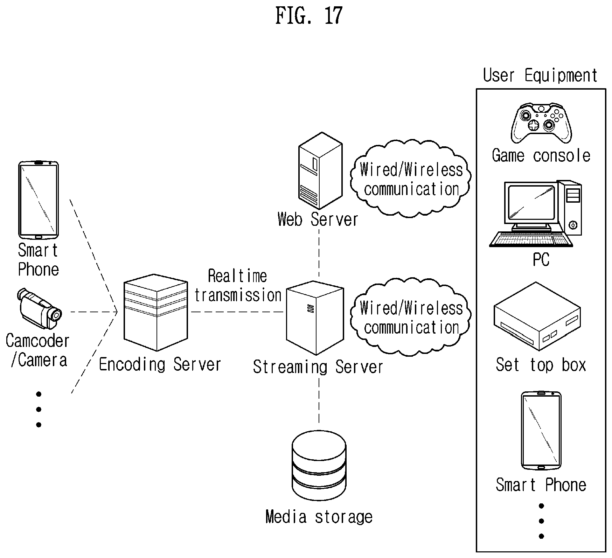

FIG. 17 is a diagram showing another example of a content streaming system to which embodiments of the present disclosure may be applied.

Referring to FIG. 17, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

### [Industrial Applicability]

An embodiment according to the present disclosure may be used to encode/decode a feature/a feature map.

## Claims

1. An image data processing method performed by a receiving apparatus, comprising:
obtaining latent space data of an image from a bitstream; and
decoding the latent space data,
wherein based on information related to a decoding scope of the image, at least one of the decoded latent space data or reconstructed data of the image is selectively output.

2. The method of Claim 1, wherein the information related to the decoding scope includes latent space coding activation information representing whether only the latent space data can be used as a decoding object.

3. The method of Claim 1, wherein the information related to the decoding scope includes prediction domain information representing a reference and prediction scope for decoding of the latent space data.

4. The method of Claim 3, wherein the prediction domain includes a first prediction domain that is restricted to refer only to the latent space data, a second prediction domain that is restricted to refer only to a pre-reconstructed image, and a third prediction domain that can refer to both the latent space data and the pre-reconstructed image.

5. The method of Claim 3, wherein a value of the prediction domain information is determined based on whether only the latent space data can be used as a decoding object.

6. The method of Claim 1, wherein the information related to the decoding scope has a decoding control information (DCI) network abstraction layer (NAL) unit type.

7. The method of Claim 1, wherein the information related to the decoding scope of the image includes output level information representing the output object.

8. The method of Claim 1, wherein based on the decoding scope of the image being not a latent space level, the method further includes reconstructing the image based on the decoded latent space data.

9. The method of Claim 1, wherein based on that the decoding scope of the image cannot be designated, the method further includes receiving a new bitstream, and
wherein obtaining and decoding the latent space data are performed based on the new bitstream.

10. An image data processing method performed by a transmitting apparatus, comprising:
obtaining latent space data of an image; and
encoding the latent space data,
wherein information related to a decoding scope of the image is encoded in a bitstream,
wherein based on the information related to the decoding scope, at least one of decoded data of the latent space data or reconstructed data of the image is selectively output by a receiving device.

11. The method of Claim 10, wherein the information related to the decoding scope includes latent space coding activation information representing whether only the latent space data can be used as a decoding object.

12. The method of Claim 10, wherein the information related to the decoding scope includes prediction domain information representing a reference and prediction scope for decoding of the latent space data.

13. The method of Claim 10, wherein the information related to the decoding scope of the image includes output level information representing the selective output object.

14. The method of Claim 10, a computer-readable recording medium storing a bitstream generated by the image data processing method.

15. A method for transmitting a bitstream generated by an image data processing method, the image data processing method comprising:
obtaining latent space data of an image; and
encoding the latent space data,
wherein information related to a decoding scope of the image is encoded in a bitstream, and
wherein based on the information related to the decoding scope, at least one of decoded data of the latent space data or reconstructed data of the image is selectively output by a receiving device.
